# EUROPÄISCHE PATENTSCHRIFT

(11) **EP 2 285 645 B1**
(45) Veröffentlichungstag und Bekanntmachung des Hinweises auf die Patenterteilung: **28.10.2015**
(21) Anmeldenummer: 09765557.5
(22) Anmeldetag: 09.06.2009
(51) Int. Cl.: B62D 15/02, B60W 30/06

(54) **VERFAHREN ZUR UNTERSTÜTZUNG EINES EINPARKVORGANGS EINES FAHRZEUGS**
METHOD FOR PARKING ASSISTANCE FOR A VEHICLE
PROCÉDÉ D'ASSISTANCE À UNE MANOEUVRE DE STATIONNEMENT D'UN VÉHICULE

(30) Priorität: 17.06.2008 DE 102008028763
(43) Veröffentlichungstag der Anmeldung: 23.02.2011
(73) Patentinhaber: Valeo Schalter und Sensoren GmbH, 74321 Bietigheim-Bissingen (DE)
(72) Erfinder: BARTH, Harald, 70825 Korntal-Münchingen (DE); JECKER, Nicolas, 73730 Esslingen (DE)
(86) Internationale Anmeldenummer: PCT/EP2009/004134
(87) Internationale Veröffentlichungsnummer: WO 2009/152977

(56) Entgegenhaltungen:
- WO-A-02/075354
- DE-A1- 10 041 381
- DE-A1- 10 120 511
- US-A1- 2005 285 758

## Beschreibung

Die Erfindung betrifft ein Verfahren zur Unterstützung eines Einparkvorgangs eines Fahrzeugs in einen quer zu einer Fahrbahn angeordneten Parkplatz der im Oberbegriff des Anspruchs 1 genannten Art.

Aus der DE 10 2005 037 468 A1 sind bereits ein derartiges Verfahren sowie eine zugehörige Vorrichtung bekannt. Das Verfahren zur Unterstützung des Einparkvorgangs umfasst die Schritte: Vermessen des Parklücke mittels einer Parklückenvermessungseinrichtung, Festlegung einer Parkposition des Fahrzeugs innerhalb der Parklücke mittels einer Auswerteeinrichtung sowie Bestimmung von Einparkbahnen des Fahrzeugs in die Parkposition mittels der Auswerteeinrichtung. Dabei können von der Auswerteeinrichtung mehrere geeignete ein- oder mehrzügige Einparkbahnen in die Parkposition bestimmt werden, von denen der Fahrer dann mittels einer Auswahleinrichtung die gewünschte Einparkbahn auswählt. Die Parkposition wird dabei von der Auswerteeinrichtung so festgelegt, dass die Mittel-Längsachse des Fahrzeugs in der Parkposition im Wesentlichen mit der Mittel-Längsachse der Parklücke übereinstimmt.

Weitere gattungsgemäße Einparkhilfssysteme sind aus US 2005 285758 A1, DE 100 41 381 A1, WO 02 075354 A und DE 101 20 511 A1 bekannt.

Diese Festlegung hat den Nachteil, dass bei sehr breiten Parklücken keine optimale Parkposition erreicht wird und keine Unterstützung des Einparkvorganges möglich ist, wenn ein Parkplatz nur auf einer Seite durch ein Hindernis begrenzt ist.

Aufgabe der Erfindung ist es, ein Verfahren zur Unterstützung eines Einparkvorgangs eines Fahrzeugs in einen quer zu einer Fahrbahn angeordneten Parkplatz der im Oberbegriff des Anspruchs 1 genannten Art dahingehend weiterzuentwickeln, dass die Unterstützung des Einparkvorganges bei Parkplätzen mit großer Breite verbessert wird.

Diese Aufgabe wird erfindungsgemäß durch ein Verfahren gemäß Anspruch 1 gelöst. Weitere die Erfindung in vorteilhafter Weise ausgestaltende Merkmale enthalten die Unteransprüche.

Der mit der Erfindung erzielte Vorteil besteht darin, dass auch bei sehr breiten Parkplätzen eine optimale Parkposition erzielt werden kann, da die Parkposition zumindest bei Überschreiten einer vorgegebenen Mindestbreite des Parkplatzes von der Auswerteeinrichtung in einem seitlichen Abstand zur Mittel-Längsachse des Parkplatzes festgelegt wird. Durch die außermittige Anordnung des Fahrzeugs in der Parkposition verbleibt bei sehr breiten Parkplätzen neben einer der Fahrzeugseite ein verbreiterter Abstand, der z. B. zum besonders komfortablen Ausstieg des Fahrers oder zum Parken wenigstens eines weiteren Fahrzeugs auf dem Parkplatz genutzt werden kann.

Falls die Breite des Parkplatzes kleiner oder gleich der Mindestbreite ist wird die Parkposition etwa auf der Mittel-Längsachse des Parkplatzes angeordnet, d. h. in der Parkposition stimmt die Mittel-Längsachse des Fahrzeugs im Wesentlichen mit der Mittel-Längsachse des Parkplatzes überein, so dass neben beiden Fahrzeugseiten ein gleichmäßiger Raum zum Ein- und Ausstieg der Fahrzeuginsassen zur Verfügung steht.

Die vorgegebene Mindestbreite des Parkplatzes, bei deren Überschreiten von der Auswerteeinheit eine außermittige Parkposition festgelegt wird, ist dabei vorzugsweise derart bemessen ist, dass innerhalb des Parkplatzes seitlich neben dem Fahrzeug wenigstens ein weiterer Personenkraftwagen üblicher Breite geparkt werden kann.

Somit wird das Fahrzeug also etwa mittig auf dem Parkplatz angeordnet, sofern eine vorgegebene Mindestbreite des Parkplatzes nicht überschritten wird und der Parkplatz unter normalen Umständen lediglich zum Einparken des Fahrzeugs ausreicht, um auf der Fahrer- und auf der Beifahrerseite den gleichen Abstand zum Aussteigen der Insassen zur Verfügung zu stellen. Falls die vorgegebene Mindestbreite des Parkplatzes überschritten wird, wird das Fahrzeug in der Parkposition außermittig auf dem Parkplatz angeordnet, um neben dem Fahrzeug ein weiteres Fahrzeug mit üblicher Breite einparken zu können. Dadurch lässt sich sowohl für Parkplätze mit sehr großer Breite als auch für Parkplätze mit normaler Breite eine optimale Parkposition erzielen.

Der seitliche Abstand der Parkposition von der Mittel-Längsachse des Parkplatzes kann durch die Auswerteeinheit besonders zuverlässig so festgelegt werden, dass das Fahrzeug in seiner Parkposition mit einer Fahrzeugseite in einem vorgegebenen seitlichen Abstand zu der den Parkplatz seitlich begrenzenden Begrenzung angeordnet ist. Bei diesem Verfahren kann auch dann eine sinnvolle Parkposition festgelegt werden, wenn die Breite des Parkplatzes so groß ist, dass von der Messeinrichtung lediglich auf einer Seite des Parkplatzes eine seitliche Begrenzung erkannt wird.

Falls der Parkplatz beidseitig durch jeweils eine zugehörige Begrenzung begrenzt ist, kann die Parkposition durch die Auswerteeinheit derart festgelegt werden, dass die Beifahrerseite des Fahrzeugs in der Parkposition in einem vorgegebenen seitlichen Abstand zur benachbarten Begrenzung angeordnet ist. Dadurch lässt sich auf der Beifahrerseite ein Mindestabstand vorgeben, während auf der Fahrerseite des Fahrzeugs ein verbreiterter Abstand zum besonders komfortablen Ausstieg verbleibt.

Alternativ kann die Parkposition bei Parkplätzen, die beidseitig durch jeweils eine zugehörige Begrenzung begrenzt sind, auch derart festgelegt werden, dass das Fahrzeug in seiner Parkposition in einem vorgegebenen seitlichen Abstand zu der Begrenzung angeordnet ist, welche dem Fahrzeug bei Begin des Einparkvorgangs am nächsten liegt. Dadurch lässt sich ein besonders einfacher und zügiger Einparkvorgang erreichen.

Um einen besonders zuverlässigen und komfortablen Einparkvorgang zu ermöglichen, kann Lenkung des Fahrzeugs beim Einparkvorgang von der Auswerteeinheit entsprechend der Einparkbahn angesteuert werden.

Zur Unterstützung des Einparkvorgangs können dem Fahrer auch über eine Ausgabeeinrichtung Informationen zur Führung des Fahrzeuges entlang der Einparkbahn übermittelt werden.

Nachfolgend wird ein Ausführungsbeispiel der Erfindung anhand einer zeichnerischen Darstellung näher erläutert.

In der Darstellung zeigen jeweils in schematischer Draufsicht:

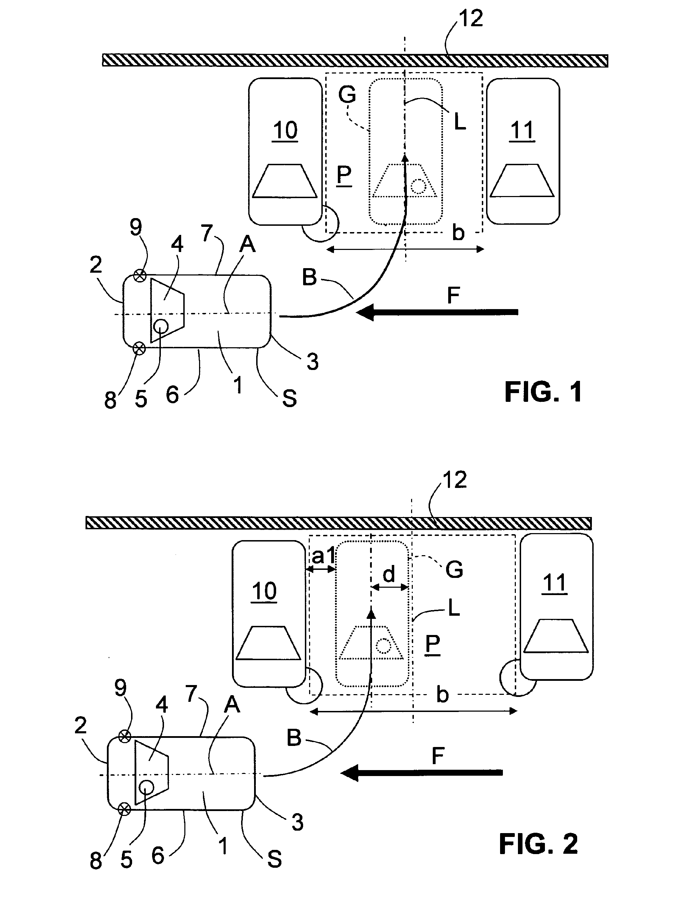

Fig. 1 - 4: den Einparkvorgang eines Fahrzeugs in verschiedene jeweils quer zu einer Fahrbahn angeordnete Parkplätze.

Die Fig. 1 - 4 zeigen jeweils in schematisierter Draufsicht Einparkvorgänge eines Kraftwagens 1 in Parkplätze P, die jeweils quer zu einer Fahrbahn F angeordnet sind. Die Parkplätze P sind seitlich durch wenigstens ein Hindernis in Form eines geparkten Autos 10 und/oder 11, an der Vorderseite durch die Fahrbahn F und an ihrem von der Fahrbahn F abgewandten hinteren Rand durch einen Bordstein 12 begrenzt.

Die Parkplätze P weisen somit insgesamt eine im Wesentlichen rechteckige Form mit einer Breite b auf, wobei die Mittel-Längsachse L jedes Parkplatzes P etwa parallel zu den seitlichen Rändern des Parkplatzes P und somit im Wesentlichen lotrecht zur Fahrbahn F im halben Breitenabstand verläuft.

Das erfindungsgemäße Verfahren und die erfindungsgemäße Vorrichtung sind jedoch nicht auf Parkplätze mit parallelen, geraden Rändern beschränkt. Dabei lässt sich die Breite des Parkplatzes z. B. als maximaler, minimaler oder projizierter Abstand zwischen den seitlichen Begrenzungen des Parkplatzes ermitteln, wenn die seitlichen Ränder des Parkplatzes einen schrägen oder gekrümmten Verlauf aufweisen, wobei die Mittel-Längsachse des Parkplatzes dann entsprechend lotrecht zur Fahrbahn F in der Mitte der Breitenerstreckung des Parkplatzes verläuft.

Der als Personenkraftwagen ausgebildete Kraftwagen 1 weist einen Bugbereich 2 und Heckbereich 3 sowie einen hinter einer Windschutzscheibe 4 angeordneten Fahrerplatz 5 auf. Bei dem als Linkslenker ausgebildeten Kraftwagen 1 ist der Fahrerplatz 5 dabei auf der linken Fahrzeugseite angeordnet, so dass die linke Fahrzeugseite eine Fahrerseite 6 und die rechte Fahrzeugseite eine Beifahrerseite 7 des Kraftwagens 1 bildet. Die Mittel-Längsachse A des Kraftwagens verläuft in Längsrichtung des Kraftwagens 1 in halbem Breitenabstand zwischen Fahrer- 6 und Beifahrerseite 7.

Der Kraftwagen 1 umfasst eine Vorrichtung zur Unterstützung eines Einparkvorgangs mit einer Messeinrichtung und einer nicht gezeigten Auswerteeinrichtung. Die Messeinrichtung umfasst zwei seitliche Abstandssensoren 8 und 9, die jeweils nahe dem Fahrzeugbug 2 auf der Fahrer- 6 bzw. Beifahrerseite 7 des Kraftwagens 1 angeordnet sind. Die Abstandssensoren 8 und 9 sind als an sich bekannte Ultraschall-Abstandssensoren ausgebildet und jeweils an einem seitlichen Rand eines nicht gezeigten vorderen Stoßfängers des Kraftwagens 1 angeordnet. Alternativ könnte die Abstandssensoren 8 und 9 aber auch nahe dem Fahrzeugheck 3, z. B an einem Heckstoßfänger angeordnet sein.

Die Abstandssensoren 8 und 9 sowie ein nicht gezeigter Wegsensor zur Ermittlung eines Fahrwegs des Kraftwagens sind mit einem nicht gezeigten Steuergerät verbunden, welches die Abstandsensoren 8 und 9 so angesteuert, dass bei der Vorbeifahrt des Kraftwagens 1 entlang der Fahrbahn F die Breite b des Parkplatzes P vermessen wird. Darüber hinaus können noch weitere geometrische Daten, wie die Tiefe und die Orientierung des Parkplatzes relativ zur Fahrbahn F durch Messung ermittelt werden. Die Breite b und die ggf. zusätzliche ermittelten geometrischen Daten sind an eine Auswerteeinheit übertragbar, welche vorzugsweise integral mit dem Steuergerät ausgebildet ist. Die Auswerteeinheit umfasst einen Programmcode, um anhand der Breite b des Parkplatzes P zunächst eine Parkposition G des Kraftwagens 1 innerhalb des Parkplatzes P festzulegen und nachfolgend ausgehend von einer Startposition S des Kraftwagens 1 eine Einparkbahn B zu ermitteln, entlang welcher der Kraftwagen 1 eine seine Parkposition G gefahren wird.

Die Auswerteeinheit ist dabei über ein Bussystem des Kraftwagens 1 mit einer nicht gezeigten Lenkung des Kraftwagens 1 verbunden, um beim Einparken des Kraftwagens 1 die Lenkung derart anzusteuern, dass der Kraftwagen 1 ausgehend von der Startposition S entlang der Einparkbahn B in seine Parkposition G überführt wird. Die Längsregelung des Kraftwagens 1, d. h. Gasgeben und Bremsen, wird dabei durch den Fahrer selbst vorgenommen. Alternativ könnte die Auswerteeinheit aber auch über das Datenbussystem mit Motorsteuerung und Bremse des Kraftwagens 1 verbunden sein, um einen vollautonomen Einparkvorgang zu ermöglichen.

Die Auswerteeinheit ist ferner dazu vorgesehen, dem Fahrer Informationen in Bezug auf den Einparkvorgang über eine Ausgabeeinrichtung, wie z. B. einem im Wageninnenraum angeordneten Display und/oder Tongeber auszugeben. Dabei können dem Fahrer z. B. Anweisungen in Bezug auf die Längssteuerung des Kraftwagens 1 aber auch zur Ansteuerung der Startposition S zu übermitteln. Des Weiteren können dem Fahrer auch Anweisungen zur Lenkung des Kraftwagens 1 gegeben werden. Dabei ist es möglich, dem Fahrer Anweisungen zur manuellen Einstellung von bestimmten Lenkwinkeln zu übermitteln, so dass der Einparkvorgang vom Fahrer manuell anhand der Steueranweisung der Ausgabeeinrichtung vorgenommen wird. Auf eine Ansteuerung der Lenkung durch die Auswerteeinrichtung kann dabei verzichtet werden.

Die Festlegung der Parkposition G des Kraftwagens 1 innerhalb des Parkplatzes P erfolgt durch den Programmcode der Auswerteeinrichtung anhand des folgenden Ablaufs:
Vergleichen der von der Messeinrichtung übergebenen Breite b1 des Parkplatzes P mit einer vorgegebenen, in der Auswerteeinrichtung gespeicherten Mindestbreite b-min.

Falls die Breite b kleiner oder gleich der Mindestbreite b-min ist, Festlegung einer Parkposition G die im Wesentlichen keinen Abstand von der Mittel-Längsachse L des Parkplatzes P aufweist, d. h. in der Parkposition G verläuft die Mittel-Längsachse A des Kraftwagens 1 etwa deckungsgleich zur Mittel-Längsachse L des Parkplatzes P.

Falls die Breite b größer der Mindestbreite b-min ist, Festlegung einer alternativen Parkposition G, die einen Abstand d zur Mittel-Längsachse L des Parkplatzes P aufweist, d. h. in der alternativen Parkposition G verläuft die Mittel-Längsachse A des Kraftwagens 1 parallel im Abstand d von der Mittel-Längsachse L des Parkplatzes P.

Die Mindestbreite b-min ist so vorgegeben, dass bei einem Parkplatz mit der Mindestbreite b-min zwei Fahrzeug üblicher Breite nebeneinander auf dem Parkplatz eingeparkt werden können, wobei ein Ein- und Ausstieg der Fahrzeuginsassen noch möglich sein soll. Die Mindestbreite b-min entspricht dabei etwa der 2,5fachen Fahrzeugbreite des Kraftwagens 1.

Bei Überschreiten der vorgegebenen Mindestbreite b-min wird die Parkposition G derart ermittelt, dass der Kraftwagen 1 in der Parkposition G mit einer Fahrzeugseite 6 oder 7 in einem vorgegebenen, in der Auswerteeinheit gespeicherten Abstand a1 von der benachbarten Begrenzung des Parkplatzes P angeordnet ist. Dabei wird gemäß dem Programmcode der Auswerteinheit nach Möglichkeit die Beifahrerseite 7 des Kraftwagens 1 in einem Abstand a1 zur benachbarten Begrenzung angeordnet. Wenn von der Messeinrichtung jedoch neben der Beifahrerseite keine entsprechende seitliche Begrenzung erkannt wird, d. h. der Parkplatz P ist entweder sehr breit oder nur auf einer Seite seitlich begrenzt, wird die Parkposition G von der Auswerteeinheit so festgelegt, dass die Fahrerseite 6 des Kraftwagens 1 in der Parkposition G in einem vorgegebenen, in der Auswerteeinheit gespeichertem Abstand a2 von der benachbarten Begrenzung angeordnet ist.

Alternativ könnte der Programmcode der Auswerteeinheit aber auch so ausgelegt sein, dass ausgehend von der Startposition S des Kraftwagens 1 bei Überschreiten der Mindestbreite b-min die Parkposition G des Kraftwagens 1 stets so festgelegt wird, dass der Kraftwagen 1 in der Parkposition G in einem vorgegebenen seitlichen Abstand zu dem Hindernis 10 bzw. 11 angeordnet ist, welches bei Beginn des Einparkvorgangs den geringeren Abstand zum Kraftwagen 1 aufweist oder mit der geringsten Anzahl von Einparkzügen erreicht werden kann. Dabei kann der Fahrer des Kraftwagens 1 die Festlegung der Parkposition G durch eine entsprechende Vorgabe der Startposition S beeinflussen. Zusätzlich wäre aber auch eine Beeinflussung der Parkposition G durch ein vom Fahrer zu betätigendes Auswahlmittel oder einen Lenkeingriff des Fahrers während des Einparkvorgangs möglich.

Die Angaben in Bezug auf die Parkposition G gelten entsprechend seitenverkehrt für Rechtslenker-Kraftwagen, bei denen die rechte Fahrzeugseite die Fahrerseite bildet.

Zum Einparken in einen Parkplatz P steuert der Fahrer den Kraftwagen 1 zunächst entlang der Fahrbahn F quer am Parkplatz P vorbei. Bei der Vorbeifahrt werden die Breite b sowie ggf. andere geometrische Daten des Parkplatzes P von der Messeinrichtung mittels des seitlichen Abstandssensors 9 und des nicht gezeigten Wegsensors ermittelt. Die Daten werden von der Messeinrichtung an die Auswerteeinheit übertragen, welche dann eine Startposition S für den Einparkvorgang, die Parkposition G des Kraftwagens 1 innerhalb des Parkplatzes P sowie eine Einparkbahn B festlegt. Nach Passieren des Parkplatzes P wird der Kraftwagen 1 vom Fahrer vorübergehend in einer Startposition S gestoppt, wobei die Auswerteeinheit dem Fahrer das Erreichen einer möglichen Startposition S über das zentrale Display des Kraftwagens 1 anzeigt.

Nach Stoppen des Kraftwagens 1 in der Startposition S leitet der Fahrer durch Einlegen eines Rückwärtsganges den Einparkvorgang ein. Dabei steuert der Fahrer durch Gas- und Bremseingriffe die Fahrgeschwindigkeit des Kraftwagens 1, während die Auswerteeinrichtung über das Bussystems des Kraftwagens 1 selbsttätig die Lenkung entsprechend der Einparkbahn B betätigt. Der Kraftwagen 1 fährt dann ausgehend von der Startposition S rückwärts entlang der Einparkbahn B in seine Parkposition G.

Nachfolgend werden anhand der Fig. 1 - 4 Einparkvorgänge des Kraftwagens 1 in Parkplätze P mit unterschiedlicher Breite näher erläutert.

Der Parkplatz P gemäß Fig. 1 ist auf seinen beiden einander gegenüberliegenden Seiten jeweils durch ein geparktes Fahrzeug 10 bzw. 11 begrenzt. Die Breite b des Parkplatzes P, welche dem Abstand zwischen den beiden Fahrzeugen 10 und 11 entspricht, weist dabei einen Wert kleiner als die vorgegebene Mindestbreite b-min auf. Die Parkposition G des Kraftwagens 1 wird somit von der Auswerteeinheit auf der Mittel-Längsachse L des Parkplatzes P angeordnet, d. h. in der in Fig. 1 gestrichelt dargestellten Parkposition G ist der Kraftwagen 1 so angeordnet, dass seine Mittel-Längsachse A etwa deckungsgleich zur Mittel-Längsachse L des Parkplatzes P verläuft. In der Parkposition G steht somit seitlich neben der Fahrer- 6 und der Beifahrerseite 7 etwa der gleiche Abstand zum benachbarten geparkten Fahrzeug 10 bzw. 11 zur Verfügung, wodurch für Fahrer und Beifahrer ein bequemer Ein- und Ausstieg möglich ist.

In Fig. 2 ist ein Einparkvorgang des Kraftwagens 1 in einen Parkplatz P dargestellt, der ebenfalls auf zwei einander gegenüberliegenden Seiten jeweils durch ein geparktes Fahrzeug 10 bzw. 11 begrenzt ist, wobei die Breite b des Parkplatzes P größer als die Mindestbreite b-min ist. Von der Auswerteeinheit wird somit eine Parkposition G festgelegt, welche in einem Abstand d von der Mittel-Längsachse L des Parkplatzes P angeordnet ist, d. h. in der in Fig. 2 gestrichelt dargestellten Parkposition G verläuft die Mittel-Längsachse A des Kraftwagens 1 im Wesentlichen parallel im Abstand d zur Mittel-Längsachse L des Parkplatzes P.

Die Parkposition G wird dabei so festgelegt, dass der Kraftwagen 1 in seiner Parkposition G mit seiner Beifahrerseite 7 in einem vorgegebenen, in der Auswerteeinheit gespeicherten Abstand a1 vom benachbarten geparkten Fahrzeug 10 angeordnet ist. Der Abstand a1 ist dabei so bemessen, dass in der Parkposition G des Kraftwagens 1 noch ein Ein- und Ausstieg von Fahrzeuginsassen auf der Beifahrerseite 7 des Kraftwagens 1 möglich ist. In Fig. 2 ist unmittelbar ersichtlich, dass in der Parkposition G des Kraftwagens 1 seitlichen neben dem Kraftwagen 1 noch ein weiterer Kraftwagen üblicher Breite geparkt werden kann.

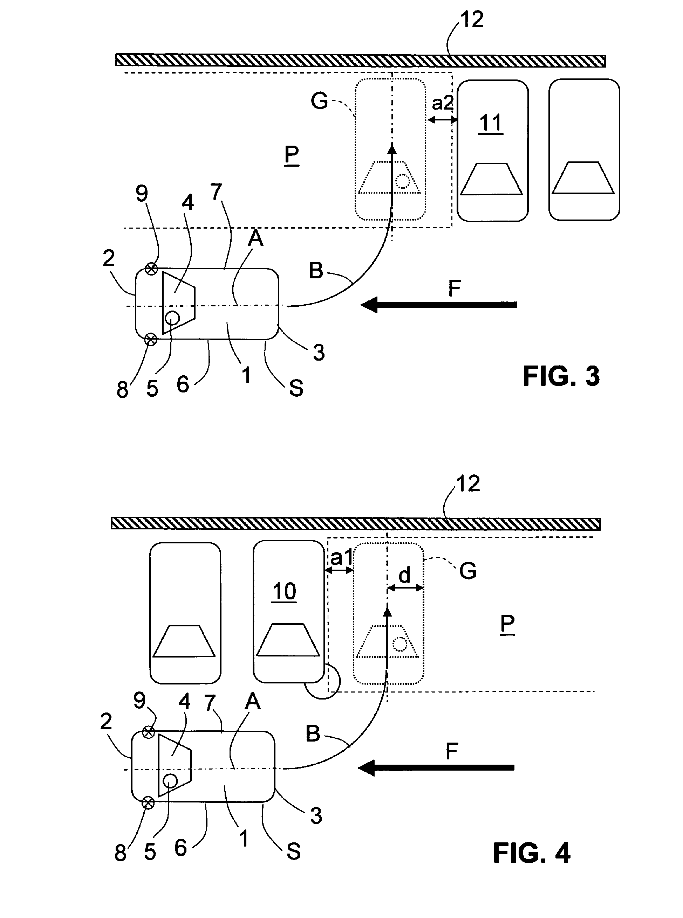

In Fig. 3 ist ein Einparkvorgang des Kraftwagens 1 in einen Parkplatz P gezeigt, welche auf der in Vorwärts-Fahrtrichtung des Kraftwagens 1 gesehen vorderen Seite durch ein geparktes Fahrzeug 11 begrenzt ist. Auf der gegenüberliegenden Seite ist der Parkplatz P entweder durch ein weit entferntes, außerhalb der Fig. 3 angeordnetes Hindernis begrenzt oder durch gar kein Hindernis begrenzt.

Dabei bedeutet es für die Vorrichtung zur Unterstützung des Einparkvorganges keinen Unterschied ob das Hindernis weit entfernt, d. h. außerhalb der Reichweite des Abstandssensors 9 angeordnet, oder ob auf dieser Seite des Parkplatzes P überhaupt keine seitliche Begrenzung des Parkplatzes P vorhanden ist, da in beiden Fällen von der Vorrichtung kein zweites seitliches Hindernis erkannt wird. Die Messeinrichtung des Kraftwagens 1 erkennt aber in jedem Fall anhand von Fahrwegsensor und Abstandmessungen des Abstandssensors 9, dass entlang eines bestimmten Fahrwegs entlang der Fahrbahn F hinter dem geparkten Fahrzeug 11 kein zweites Hindernis erkannt wird und der Parkplatz P eine ausreichende Breite für einen unterstützten Einparkvorgang aufweist. Dann wird dem Fahrer nach Erreichen einer von der Auswerteeinrichtung ermittelten Startposition S mittels der Ausgabeeinrichtung angezeigt, dass ein unterstützter Einparkvorgang möglich ist.

Nachdem festgestellt wurde, dass ein unterstützter Einparkvorgang möglich ist, legt die Auswerteeinrichtung die Parkposition G innerhalb des Parkplatzes P fest. Da die Breite des Parkplatzes P größer als die Mindestbreite b-min ist, wird die Parkposition G von der Auswerteeinrichtung in einem Abstand zur Mittel-Längsachse des Parkplatzes P festgelegt. Die Parkposition G wird dabei so festgelegt, dass der Kraftwagen 1 in seiner Parkposition G in einem vorgegebenen, in der Auswerteeinrichtung gespeicherten Abstand von der einzigen erkannten seitlichen Begrenzung des Parkplatzes P angeordnet wird, d. h. in seiner in Fig. 3 gestrichelt dargestellten Parkposition G ist die Fahrerseite 6 des Kraftwagens 1 in einem Abstand a2 vom benachbarten geparkten Fahrzeug 11 angeordnet. Der Abstand a2 ist dabei so bemessen, dass neben der Fahrerseite 6 noch ein ausreichender Raum zum Ein- und Ausstieg des Fahrers zur Verfügung steht.

In Fig. 4 ist ein Einparkvorgang in einen Parkplatz P gezeigt, welcher entlang der Fahrbahn F auf der in Vorwärts-fahrtrichtung des Kraftwagens 1 gesehen hinteren Seite durch ein geparktes Fahrzeug 10 begrenzt ist. Die gegenüberliegende Seite des Parkplatzes P kann entweder durch keine oder eine weit entfernte, außerhalb der Darstellung angeordnete seitliche Begrenzung begrenzt sein. In jedem Fall wird beim Passieren des Parkplatzes P durch den Kraftwagen 1 entlang der Fahrbahn F für einen bestimmten Fahrweg vor dem geparkten Fahrzeug 10 kein Hindernis erkannt und von der Auswerteeinheit festgestellt, dass ein Parkplatz P mit ausreichender Breite für einen unterstützten Einparkvorgang zur Verfügung steht.

Da die Breite des Parkplatzes P größer als die Mindestbreite b-min ist, wird die Parkposition G von der Auswerteeinrichtung in einem Abstand zur Mittel-Längsachse des Parkplatzes P festgelegt. Die Parkposition G wird dabei so festgelegt, dass der Kraftwagen 1 in seiner Parkposition G in einem vorgegebenen, in der Auswerteeinrichtung gespeicherten Abstand entweder von der einzigen erkannten seitlichen Begrenzung oder von der seitlichen Begrenzung des Parkplatzes P angeordnet wird, welche in der Startposition S für den Einparkvorgang den geringsten Abstand von Kraftwagen 1 aufweist. Der Kraftwagen 1 ist somit in seiner in Fig. 4 gestrichelt dargestellten Parkposition G mit seiner Beifahrerseite 7 in einem Abstand a1 zum benachbarten geparkten Fahrzeug 10 angeordnet. Der Abstand a1 ist dabei so bemessen, dass neben der Beifahrerseite 7 noch ein ausreichender Raum zum Ein- und Ausstieg des Beifahrers zur Verfügung steht.

## Patentansprüche

1. Verfahren zur Unterstützung eines Einparkvorgangs eines Fahrzeugs in einen quer zu einer Fahrbahn angeordneten Parkplatz, der beidseitig durch jeweils eine zugehörige Begrenzung begrenzt ist, mit den Schritten:
- Vermessen des Parkplatzes mittels einer Messeinrichtung,
- Festlegung einer Parkposition des Fahrzeugs innerhalb des Parkplatzes mittels einer Auswerteeinrichtung und
- Bestimmung einer Einparkbahn des Fahrzeuges in die Parkposition mittels der Auswerteeinrichtung,
**dadurch gekennzeichnet,**
**dass** die von der Messeinrichtung übergebene Breite (b) des Parkplatzes (P) mit einer vorgegebenen, in der Auswerteeinrichtung gespeicherten Mindestbreite (b-min) verglichen wird,
**dass**, falls die Breite (b) kleiner oder gleich der Mindestbreite (b-min) ist, eine Parkposition (G) festgelegt wird, die im Wesentlichen keinen Abstand von der Mittel-Längsachse (L) des Parkplatzes (P) aufweist, und
**dass** die Parkposition (G) bei Überschreiten der vorgegebenen Mindestbreite (b-min) des Parkplatzes (P) von der Auswerteeinrichtung in einem seitlichen Abstand (d) zur Mittel-Längsachse (L) des Parkplatzes (P) festgelegt wird.

2. Verfahren nach Anspruch 1,
**dadurch gekennzeichnet,**
**dass** die Mindestbreite (b-min) des Parkplatzes (P) derart bemessen ist, dass innerhalb des Parkplatzes (P) neben dem Fahrzeug (1) wenigstens ein weiterer Personenkraftwagen üblicher Breite eingeparkt werden kann.

3. Verfahren nach einem der vorhergehenden Ansprüche,
**dadurch gekennzeichnet,**
**dass** der seitliche Abstand der Parkposition (G) von der Mittel-Längsachse (L) des Parkplatzes (P) durch die Auswerteeinheit derart festgelegt wird, dass das Fahrzeug (1) in seiner Parkposition (G) mit einer Fahrzeugseite (6, 7) in einem vorgegebenen seitlichen Abstand (a1, a2) zur seitlichen Begrenzung (10, 11) angeordnet ist.

4. Verfahren nach Anspruch 3,
**dadurch gekennzeichnet,**
**dass** der Parkplatz (P) beidseitig durch jeweils eine zugehörige Begrenzung (10, 11) begrenzt ist, wobei die Parkposition (G) durch die Auswerteeinheit derart festgelegt wird, dass das Fahrzeug (1) in seiner Parkposition (G) mit seiner Beifahrerseite (7) in einem vorgegebenen seitlichen Abstand (a1) zur benachbarten Begrenzung (10) angeordnet ist.

5. Verfahren nach Anspruch 3,
**dadurch gekennzeichnet,**
**dass** der Parkplatz (P) beidseitig durch jeweils eine zugehörige Begrenzung (10, 11) begrenzt ist, wobei die Parkposition (G) durch die Auswerteeinheit derart festgelegt wird, dass das Fahrzeug (1) in der Parkposition (G) in einem vorgegebenen seitlichen Abstand (a1, a2) zu der Begrenzung (10, 11) angeordnet ist, welche dem Fahrzeug (1) bei Begin des Einparkvorgangs am nächsten liegt.

6. Verfahren nach einem der vorhergehenden Ansprüche,
**dadurch gekennzeichnet,**
**dass** eine Lenkung des Fahrzeugs (1) beim Einparkvorgang von der Auswerteeinheit entsprechend der Einparkbahn (B) angesteuert wird.

7. Verfahren nach einem der vorgehenden Ansprüche,
**dadurch gekennzeichnet,**
**dass** dem Fahrer beim Einparkvorgang über eine Ausgabeeinrichtung Informationen zur Führung des Fahrzeuges (1) entlang der Einparkbahn (G) übermittelt werden.

## Claims

1. Method for providing assistance to a vehicle in parking in a parking space which is arranged transversally with respect to a carriageway and is bounded on each of its two sides by an associated boundary, having the steps:
- measuring the parking space by means of a measuring device,
- defining a parked position of the vehicle inside the parking space by means of an evaluation device, and
- determining a parking path of the vehicle into the parked position by means of the evaluation device,
**characterized**
**in that** the width (b) of the parking space (P) being delivered by the measuring device is compared with a predefined minimum width (b-min) which is stored in the evaluation device,
**in that** if the width (b) is less than or equal to the minimum width (b-min), a parked position (G) is defined which is not at a substantial distance from the central longitudinal axis (L) of the parking space (P), and in that when the predefined minimum width (b-min) of the parking space (P) is exceeded by the evaluation device, the parked position (G) is defined at a lateral distance (d) from the central longitudinal axis (L) of the parking space (P).

2. Method according to Claim 1,
**characterized**
**in that** the minimum width (b-min) of the parking space (P) is dimensioned in such a way that at least one further passenger car of a customary width can be parked next to the vehicle (1) inside the parking space (P).

3. Method according to one of the preceding claims,
**characterized**
**in that** the lateral distance of the parked position (G) from the central longitudinal axis (L) of the parking space (P) is defined by the evaluation unit in such a way that the vehicle (1) is arranged in its parked position (G) with one vehicle side (6, 7) at a predefined lateral distance (a1, a2) from the lateral boundary (10, 11).

4. Method according to Claim 3,
**characterized**
**in that** the parking space (P) is bounded on each of its two sides by an associated boundary (10, 11), wherein the parked position (G) is defined by the evaluation unit in such a way that the vehicle (1) is arranged in its parked position (G) with its front seat passenger's side (7) at a predefined lateral distance (a1) from the adjacent boundary (10).

5. Method according to Claim 3,
**characterized**
**in that** the parking space (P) is bounded on each of its two sides by an associated boundary (10, 11), wherein the parked position (G) is defined by the evaluation unit in such a way that the vehicle (1) is arranged in the parked position (G) at a predefined lateral distance (a1, a2) from the boundary (10, 11) which is closest to the vehicle (1) at the start of the parking process.

6. Method according to one of the preceding claims,
**characterized**
**in that** a steering system of the vehicle (1) is actuated during the parking process by the evaluation unit in accordance with the parking path (B).

7. Method according to one of the preceding claims,
**characterized**
**in that** during the parking process information relating to the guidance of the vehicle (1) along the parking path (B) is conveyed to the driver via an output device.

## Revendications

1. Procédé d'assistance à une manoeuvre de stationnement d'un véhicule dans un emplacement de stationnement disposé transversalement par rapport à la chaussée et délimité sur ses deux côtés par une frontière respective, le procédé présentant les étapes qui consistent à :
mesurer au moyen d'un dispositif de mesure l'emplacement de stationnement,
définir une position de stationnement du véhicule à l'intérieur de au moyen d'un dispositif d'évaluation l'emplacement de stationnement et
déterminer au moyen du dispositif d'évaluation le parcours de stationnement du véhicule dans la position de stationnement,
**caractérisé en ce que**
la largeur (b) de l'emplacement de stationnement (P) transmise par le dispositif de mesure est comparée à une largeur minimale (b-min) prédéterminée et conservée en mémoire dans le dispositif d'évaluation,
**en ce qu'**au cas où la largeur (b) est inférieure ou égale à la largeur minimale (b-min), définir une position de stationnement (G) qui ne présente essentiellement aucun écart par rapport à l'axe longitudinal central (L) de l'emplacement de stationnement (P) et
**en ce que** lorsque la largeur minimale prédéterminée (b-min) de l'emplacement de stationnement (P) est dépassée, la position de stationnement (G) est définie par le dispositif d'évaluation à une distance latérale (D) par rapport à l'axe longitudinal central (L) de l'emplacement de stationnement (P).

2. Procédé selon la revendication 1, **caractérisé en ce que** la largeur minimale (b-min) de l'emplacement de stationnement (P) est mesurée de telle sorte qu'au moins une autre voiture de largeur habituelle puisse être stationnée en plus du véhicule (1) à l'intérieur de l'emplacement de stationnement (P).

3. Procédé selon l'une des revendications précédentes, **caractérisé en ce que** la distance latérale entre l'emplacement de stationnement (G) et l'axe longitudinal central (L) de l'emplacement de stationnement (P) est définie par l'unité d'évaluation de telle sorte que le véhicule (1) soit disposé dans sa position de stationnement (G) à une distance latérale prédéterminée (a1, a2) entre un côté (6, 7) du véhicule et la frontière latérale (10, 11).

4. Procédé selon la revendication 3, **caractérisé en ce que** l'emplacement de stationnement (P) est délimité des deux côtés par une frontière (10, 11) respective, la position de stationnement (G) étant définie par l'unité d'évaluation de telle sorte que dans sa position de stationnement (G), le véhicule (1) soit disposé avec le côté (7) du passager à une distance latérale prédéterminée (a1) par rapport à la frontière voisine (10).

5. Procédé selon la revendication 3, **caractérisé en ce que** l'emplacement de stationnement (P) est délimité des deux côtés par une frontière (10, 11) respective, la position de stationnement (G) étant définie par l'unité d'évaluation de telle sorte que dans sa position de stationnement (G), le véhicule (1) soit disposé à une distance latérale prédéterminée (a1, a2) de la frontière (10, 11) la plus proche du véhicule (1) au début de la manoeuvre de stationnement.

6. Procédé selon l'une des revendications précédentes, **caractérisé en ce que** le guidage du véhicule (1) lors de la manoeuvre de stationnement est commandé par l'unité d'évaluation en fonction du parcours de stationnement (B).

7. Procédé selon l'une des revendications précédentes, **caractérisé en ce que** lors d'une manoeuvre de stationnement, des informations de guidage du véhicule (1) le long du parcours de stationnement (B) sont transmises au conducteur par un dispositif de sortie.
